# EUROPÄISCHE PATENTSCHRIFT

(11) **EP 4 070 349 B1**
(45) Veröffentlichungstag und Bekanntmachung des Hinweises auf die Patenterteilung: **22.11.2023**
(21) Anmeldenummer: 19832663.9
(22) Anmeldetag: 19.12.2019
(51) Int. Cl.: H01H 9/00, H01F 29/04

(54) **VORRICHTUNG ZUM ANSCHLUSS AN EIN HOCHSPANNUNGSNETZ**
DEVICE FOR CONNECTING TO A HIGH-VOLTAGE GRID
DISPOSITIF DESTINÉ À SE CONNECTER À UN RÉSEAU À HAUTE TENSION

(43) Veröffentlichungstag der Anmeldung: 12.10.2022
(73) Patentinhaber: Siemens Energy Global GmbH & Co. KG, 81739 München (DE)
(72) Erfinder: SPÄTH, Matthias, 92318 Neumarkt i.d.OPf (DE)
(86) Internationale Anmeldenummer: PCT/EP2019/086315
(87) Internationale Veröffentlichungsnummer: WO 2021/121598

(56) Entgegenhaltungen:
- DE-A1- 2 002 054
- DE-A1-102009 048 813
- US-A- 4 081 741

## Beschreibung

Die Erfindung betrifft eine Vorrichtung zum Anschluss an eine Wechselspannung führendes Hochspannungsnetz mit mehreren Phasen. Die Vorrichtung ist mit einem Aktivteil, das wenigstens einen Phasenanschluss zum Anschluss an eine Phase des Hochspannungsnetzes aufweist, wenigstens einer einem der Phasenanschlüsse nachgeschalteten Stufenwicklung mit mehreren Anzapfungen und einem Stufenschalter ausgerüstet, der für jede Stufenwicklung einen Wähler zum stromlosen Umschalten von einer aktuellen Anzapfung auf eine gewünschte Anzapfung der Stufenwicklung und einen dem Wähler in Reihe nachgeschalteten Lastumschalter zum Kommutieren des Stromes von der aktuellen Anzapfung auf die gewünschte Anzapfung aufweist.

Eine solche Vorrichtung ist aus der Praxis bekannt. So werden beispielsweise Vorrichtungen für die Übertragung und Verteilung elektrischer Leistung so ausgestaltet, dass diese an ein Versorgungsnetz angeschlossen werden können, das auf einem Hochspannungspotential liegt. Auf Grund der hohen Spannungen können die Verluste bei der Übertragung minimiert werden. Aus diesem Grund werden Hochspannungsnetze bei Spannungen zwischen 50 kV und 1200 kV betrieben. Beispiele von Vorrichtungen der Elektroenergieübertragung, die an die Hochspannungsnetze angeschlossen werden, sind Schalter, Drosseln und Transformatoren.

Transformatoren dienen der Spannungsumwandlung. Sie weisen in der Regel für jede Phase des Hochspannungsnetzes ein Paar von Wicklungen auf, die oft als Primär- und Sekundärwicklung bezeichnet werden. Zur Anpassung der Spannung oder Impedanz sind Transformatoren mit einem so genannten Stufenschalter ausgerüstet, der Anzapfungen einer Stufenwicklung kontaktiert. Dabei ist die Stufenwicklung in Reihe zur Primär- und/oder Sekundärwicklung geschaltet, wobei die Stufenwicklung mit dem Niederspannungsende der jeweiligen Hauptwicklung, also der Primär oder Sekundärwicklung, verbunden ist.

Durch die Auswahl der Anzapfung der Stufenwicklung durch den Stufenschalter kann die Anzahl der in Reihe geschalteten Windungen auf der Primär- oder Sekundärseite verändert und somit das Verhältnis zwischen Eingangs- und Ausgangspannung nach Wusch variiert werden.

Bei einem solchen Tranformator mit Stufenschalter, insbesondere mit einem Laststufenschalter (OLTC = On Load Tap Changer), kann ein Fehler oder eine Überspannung im Stufenschalter oder in der Stufenwicklung zu einem Kurzschluss zwischen zwei Stufen oder Anzapfungen führen. Im Allgemeinen hat dies einen sehr großen Kurzschlussstrom durch einen Teil der Stufenwicklung im Gefolge, der den Strom im Fall eines äußeren Kurzschlusses weit überschreitet. In den allermeisten Fällen führt dies zur vollständigen Zerstörung des Stufenschalters und unter Umständen des Transformators, mit erheblichen Gefahren durch z.B. Feuer, umherfliegende Teile oder herausspritzendes Öl.

Insbesondere im Bereich von Leistungstransformatoren ist bisher keine Technik bekannt, die den Fehler oder die Fehlerfolgen eindämmt oder zumindest minimiert. Heute übliche Systeme (z.B. Differentialschutz) benötigen wenigsten 40 ms oder mehr bis der zugehörige Leistungsschalter den Transformator abschaltet und somit vom Hochspannungsnetz trennt. In dieser Zeit ist der größte Schaden jedoch bereits entstanden. Weiteren Stand der Technik bilden die Druckschriften DE 20 02 054 A1, DE 10 2009 048 813 A1 und US 4,081,741 A.

Aufgabe der Erfindung ist es daher, eine Vorrichtung der eingangs genannten Art zu schaffen, mit der Kurzschlussströme im Stufenschalter oder in einem Abschnitt der Stufenwicklung begrenzt werden können.

Zur Lösung dieser Aufgabe schafft die vorliegende Erfindung eine Vorrichtung nach Anspruch 1 oder 2.

Erfindungsgemäß ist der Stufenschalter mit einer Impedanzeinheit ausgerüstet, die im Strompfad zwischen jedem Wähler und dem diesem Wähler in Reihe geschalten Lastumschalter angeordnet ist. Der erfindungsgemäße Stufenschalter verfügt bevorzugt über wenigstens zwei Wähler und wenigstens zwei Lastumschalter, wobei jedem Wähler jeweils ein Lastumschalter in Reihe geschaltet ist. Mit anderen Worten bildet der Stufenschalter mehrere Paare von Wähler und Lastumschalter aus, die zueinander in Reihe geschaltet sind. Jede Stufenwicklung verfügt über ein Paar des Stufenschalters, dass aus Wähler und Lastumschalter besteht. In jedem Strompfad zwischen Wähler und Lastumschalter ist eine Komponente einer Impedanzeinheit angeordnet, deren Impedanz oder mit anderen Worten deren Wechselstromwiderstand zwischen zwei Zuständen veränderbar oder mit anderen Worten schaltbar ist. Bei Normalbetrieb weist die Impedanzeinheit eine niedrige Impedanz auf, so dass zwischen jedem Wähler und jedem Lastumschalter ein niederohmiger Strompfad bereitgestellt ist. Im Fehlerfall wird die Impedanz, beispielsweise aktiv durch ein äußeres Steuersignal, in den zweiten Zustand überführt, in dem die Impendanzeinheit eine hohe Impedanz bereitstellt, so dass ein Kurzschlussstrom im Stufenschalter und/oder der Stufenwicklung begrenzt ist. Ein Schaden kann somit vermieden werden, bevor der Transformator durch einen äußeren Leistungsschalter, der zwischen jedem Phasenanschluss der erfindungsgemäßen Vorrichtung und dem Hochspannungsnetz angeordnet ist, vom Netz genommen wird.

Vorteilhafterweise ist die Impedanzeinheit passiv veränderbar. Mit anderen Worten sorgt bei dieser Ausgestaltung der erfindungsgemäßen Vorrichtung selbst dafür, dass die Impedanzeinheit von einem Normalbetriebszustand, in dem sie eine niedrige Impedanz aufweist, in einen Begrenzungszustand überführt wird, in dem sie für eine hohe Impedanz im Strompfad zwischen Wähler und Lastumschalter des Stufenschalters sorgt. Das Aktivteil verfügt für jede Phase über wenigstens eine Hauptwicklung, die an ihrem vom Phasenanschluss abgewandten Ende mit einer der Stufenwicklungen verbunden ist. Jeder Wähler weist ein erstes Wählerkontaktteil zum Verbinden mit der aktuellen Anzapfung und ein zweites Wählerkontaktteil zum Verbinden mit der gewünschten Anzapfung auf, wobei jeder Lastumschalter über einen ersten Lastumschalterkontakt A, der mit dem ersten Wählerkontaktteil galvanisch verbunden ist, einen zweiten Lastumschalterkontakt B, der mit dem zweiten Wählerkontaktteil galvanisch verbunden ist, und über ein Bewegteil verfügt, das in einer ersten Schalterstellung des Stufenschalters den ersten Lastumschalterkontakt A und in einer zweiten Schalterstellung den zweiten Lastumschalterkontakt B des Lastumschalters kontaktiert. Dabei umfasst die Impedanzeinheit eine erste und zweite Komponente, wobei die erste Komponente mit dem ersten Wählerkontaktteil jedes Wählers und dem ersten Lastumschalterkontakt A jedes Lastumschalters und die zweite Komponente mit dem zweiten Wählerkontaktteil jedes Wählers und dem zweiten Lastumschalterkontakt B jedes Lastumschalters verbunden ist, so dass je nach Schalterstellung des Stufenschalters ein Stromfluss über die eine oder die andere Komponente ermöglicht ist.

Das Aktivteil verfügt für jede Phase über wenigstens eine Hauptwicklung, die an ihrem vom Phasenanschluss abgewandten Ende mit einer der Stufenwicklungen verbunden ist. Jede Stufenwicklung ist mit einem Paar bestehend aus Wähler und Lastumschalter verbunden. Dabei weist jeder Wähler ein erstes und zweites Wählerkontaktteil auf, wobei jeder Lastumschalter über einen ersten und zweiten Lastumschalterkontakt verfügt. Bei einem Paar aus Wähler und Lastumschalter, das einer Stufenwicklung zugeordnet ist, ist das erste Wählerkontaktteil mit dem ersten Lastumschalterkontakt und jedes zweite Wählerkontaktteil mit dem zweiten Lastumschalterkontakt galvanisch verbunden. Die Impedanzeinheit weist dabei eine erste und zweite Komponente auf, wobei jede Komponente der Impedanzeinheit mit jedem Wähler und jedem Lastumschalter verbunden ist.

Wesentlich ist hierbei, dass eine Komponente der Impedanzeinheit mit den jeweils Strom führenden Kontakten aller Wähler und Lastumschalter verbunden ist. Damit wird im Rahmen der Erfindung der Strom in einem ersten Schaltzustand des Stufenschalters über die eine Komponenten der Impendanzeinheit geführt, wohingen die jeweils andere Komponente stromfrei bleibt. So ist beispielsweise die erste Komponenten mit dem ersten Wählerkontaktteil und dem ersten Lastumschalterkontakt des ersten Paares des Stufenschalters und mit dem ersten Wählerkontaktteil und dem ersten Lastumschalterkontakt des zweiten Paares verbunden. Beim Betrieb der Vorrichtung liegt das erste Wählerkontaktteil an der stromführenden Anzapfung der Stufenwicklung an. Ein Bewegteil des Stufenschalters ist im Kontakt mit jedem ersten Lastumschalterkontakt. Im Normalbetrieb fließt somit bei jedem Paar aus Wähler und Lastumschalter der Strom über das erste Wählerkontaktteil und den ersten Lastumschalterkontakt. Alle Ströme werden über die erste Komponente der Impedanzeinheit geführt.

Soll eine andere Anzapfung gewählt werden, wird der Wähler betätigt, so dass das zweite Wählerkontaktteil in Kontakt mit der gewünschten Anzapfung der Stufenwicklung gebracht wird. Dies erfolgt stromlos, da der in Reihe geschaltete zweite Lastumschalterkontakt das Bewegteil des Stufenschalters nicht kontaktiert. Wird das Bewegteil eines jeden Lastumschalters in Kontakt mit dem zweiten Lastumschalterkontakt gebracht, kommutiert der Strom auf jedes zweiten Wählerkontaktteil und jeden zweiten Lastumschalterkontakt. Mit diesen Kontakten ist die zweite Komponente der Impedanzeinheit verbunden. Mit anderen Worten fließ der Strom nun ausschließlich über die zweite Komponente der Impedanzeinheit. Jede Komponente ist so ausgestaltet, dass die über sie symmetrisch fließenden Ströme dafür sorgen, dass die Impedanz der Komponente sehr klein und etwa Null ist. Steigt einer der über die Komponente fließenden Ströme jedoch stark an, sorgt dies für die gewünschte hohe Impedanz der Komponente.

Erfindungsgemäß weist jede Komponente der Impedanzeinheit für jede Phase der Vorrichtung eine Impedanzwicklung auf, wobei die Impedanzwicklungen einer Komponente induktiv miteinander gekoppelt und so miteinander verschaltet sind, dass sich bei einem symmetrischen Stromfluss über die Phasen der Vorrichtung die Reaktanzen der Impedanzwicklungen einer Komponente gegenseitig kompensieren, so dass die jeweilige Komponente einen niedrigen resultierenden Impedanzwert aufweist.

Entsprechend weist jede Komponente der Impedanzeinheit mehrere Impedanzwicklungen auf, die induktiv miteinander gekoppelt sind. Die Anzahl der Impedanzwicklungen entspricht der Anzahl der Phasen der Vorrichtung.

Ferner schafft die vorliegende Erfindung zur Lösung der eingangs genannten Aufgabe eine Vorrichtung nach Anspruch 2. Hier ist die Vorrichtung einphasig ausgebildet und weist zwei symmetrische Strompfade auf, wobei in jedem Strompfad wenigstens eine Hauptwicklung des Aktivteils angeordnet ist, die ein Hochspannungsende, das mit dem Phasenanschluss verbunden ist, und ein Niederspannungsende aufweist, das mit einer Stufenwicklung verbunden ist, wobei jede Komponente der Impedanzeinheit zwei induktiv miteinander gekoppelte Impedanzwicklungen aufweist, wobei eine der Impedanzwicklungen mit dem Wähler und Lastumschalter der ersten Stufenwicklung und die andere Impedanzwicklung mit dem Wähler und dem Lastumschlalter der zweiten Stufenwicklung verbunden und so verschaltet ist, dass sich bei einem symmetrischen Stromfluss über beide Strompfade die Reaktanzen der Impedanzwicklungen einer Komponente gegenseitig kompensieren, so dass die jeweilige Komponente eine niedrige Impedanz aufweist.

Bei dieser Ausgestaltung der Erfindung ist die Vorrichtung einphasig ausgebildet, bildet jedoch zwei symmetrische Strompfade aus. In jedem Strompfad ist wenigstens eine Hauptwicklung des Aktivteils angeordnet. Jeder Hauptwicklung ist eine Stufenwicklung in Reihe geschaltet.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein Ausführungsbeispiel der erfindungsgemäßen Vorrichtung und
- Figur 2: ein weiteres Ausführungsbeispiel der erfindungsgemäßen Vorrichtung schematisch verdeutlichen.

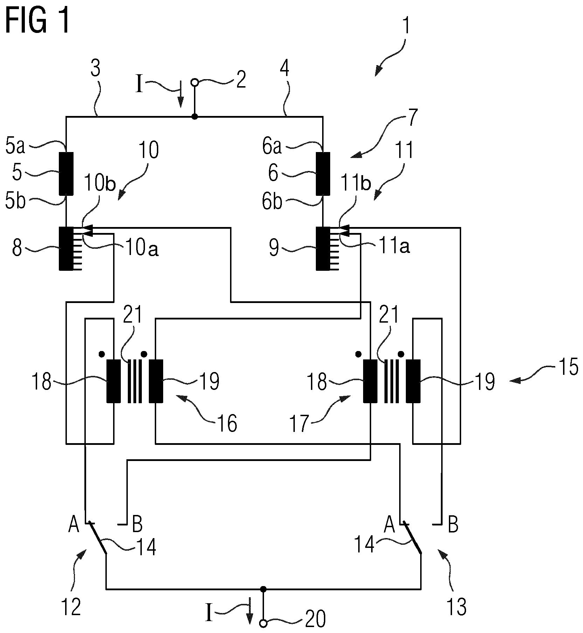

Figur 1 zeigt ein Ausführungsbeispiel der erfindungsmäßen Vorrichtung 1, die einen Phasenanschluss 2 aufweist, der mit einer Phase eine Wechselspannung führenden Hochspannungsnetzes verbindbar ist. Mit dem Großbuchstaben I wird der Phasenstrom verdeutlicht, der in dem in Figur 1 gezeigten Ausführungsbeispiel von dem Phasenanschluss 2 zu einem weiter unten dargestellten Erdanschluss fließt.

Die Vorrichtung 1 weist zwei symmetrisch ausgestaltete Strompfade 3 und 4 auf, wobei in jedem Strompfad eine Hauptwicklung 5 bzw. 6 eines Aktivteils 7 angeordnet ist. Jede Hauptwicklung 5, 6 weist ein Hochspannungsende 5a, 6a auf, das mit dem Phasenanschluss 2 verbunden ist. Ferner verfügt jede Hauptwicklung 5 bzw. 6 über ein Niederspannungsende 5b, 6b das mit einer Stufenwicklung 8 bzw. 9 verbunden ist. Jede Stufenwicklung 8, 9 ist mit durch kurze Querstriche dargestellten Anzapfungen ausgerüstet. Dabei ist jeder Stufenwicklung 8 bzw. 9 ein Wähler 10 bzw. 11 eines Stufenschalters zugeordnet, wobei jeder Wähler 10, 11 ein erstes Wählerkontaktteil 10a, 11a und zum Verbinden mit einer aktuellen Anzapfung und ein zweites Wählerkontaktteil 10b, 11b aufweist, das in Kontakt mit der nächsten gewünschten Anzapfung gebracht werden kann.

Jedem Wähler ist ein Lastumschalter 12 bzw. 13 zugeordnet, wobei jeder Lastumschalter zwei Lastumschaterkontakte A und B aufweist. In der gezeigten Stellung ist ein als Schaltmesser 14 ausgeführtes Bewegteil des jeweiligen Lastumschalters 12, 13 mit dem ersten Lastumschalterkontakt A verbunden. Dies gilt entsprechend für das Schaltmesser 14 des Lastumschalters 13. In dem Strompfad zwischen jedem Wähler 10, 11 und dem zugeordenten Lastumschalter 12, 13 ist eine Impedanzeinheit 15 angeordnet. Die Impedanzeinheit 15 umfasst eine erste Komponente 16 sowie eine zweite Komponente 17.

Die Komponente 16 der Impedanzeinheit 15 verfügt über eine erste Impendanzwicklung 18, die mit dem ersten Wählerkontaktteil 10a des Wählers 10 und dem ersten Lastumschalterkontakt A des Lastumschalters 12 verbunden ist. Die zweite Impedanzwicklung 19 der Komponente 16 ist hingegen mit dem ersten Wählerkontaktteil 11a des Wählers 11 und dem ersten Lastumschalterkontakt A des Lastumschalters 13 der zweiten Stufenwicklung 9 verbunden. Dies gilt entsprechend für die zweite Komponente 17, deren Impedanzwicklungen 18, 19 mit dem zweiten Wählerkontaktteil der Wähler 10 bzw. 11 verbunden sind. Sie sind ferner mit jedem zweiten Lastumschlaterkontakt B der Lastumschalter 12 und 13 verbunden. Jede Komponente 16, 17 ist somit mit allen Wählern und allen Lastumschaltern verbunden. Je nach Schaltstellung des Stufenschalters fließt daher der Strom über die Impedanzwicklungen der Komponenten 16 oder 17.

Der erste Strompfad 3 umfasst somit die Hauptwicklung 5, die Stufenwicklung 8, eine erste Impedanzwicklung 18 der ersten Komponente 16, den Lastumschalterkontakt A des ersten Lastumschalters 12 und schließlich den Erdanschluss 20. Der zweite Strompfad 4 führt über die Hauptwicklung 6, die Stufenwicklung 9, den Wähler 11, die zweite Impedanzwicklung 19 der ersten Komponente 16 sowie den Lastumschalterkontakt A des zweiten Lastumschalters 13. Über die Wicklungen 18, 19 der ersten Komponente wird somit der gleiche Strom geführt. Dabei sind die Wicklungen 18, 19 gegensinnig zueinander gewickelt, was durch die gegensinnige Verschaltung und den über den Wicklungen gezeigten Punkt verdeutlicht werden soll. Die induktive Kopplung der ersten und zweiten Wicklung 18, 19 erfolgt über einen Eisenkern 21, der nur schematisch dargestellt ist.

Aufgrund des symmetrischen Stromflusses und der induktiven Kopplung weist die erste Komponente 16 bei Normalbetrieb eine Impedanz von Null auf, so dass bei Normalbetrieb keine Verluste entstehen. Im Fehlerfall, also bspw. bei einem Kurzschluss der Stufenwicklung fließt über die erste Impedanzwicklung 18 der ersten Komponente 16 ein größerer Strom als über deren zweite Impedanzwicklung 19. Somit kompensieren sich die Impedanzwicklungen nicht länger. Es bildet sich eine Impedanz zwischen der Stufenwicklung 8 und dem Lastumschalter 12 aus, so dass der Kurzschlussstrom begrenzt wird und Maßnahmen ergriffen werden können, bevor es zu irreparablen Schäden der Vorrichtung 1 kommt.

Werden die Schaltmesser 14 der Lastumschalter auf den Lastumschalterkontakt B geschaltet, kommt es zu einem Stromfluss allein über die Komponente 17 der Impedanzeinheit 15, die wie die Komponente 16 aufgebaut ist. Sie übernimmt die gleiche Rolle, die im Zusammenhang mit der ersten Komponente 16 erläutert wurde.

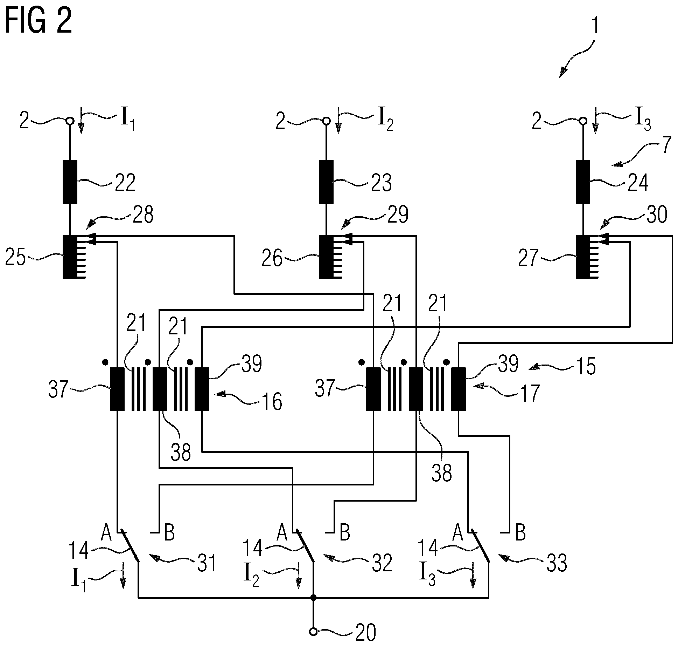

Figur 2 zeigt ein weiteres Ausführungsbeispiel der erfindungsgemäßen Vorrichtung 1, die im Gegensatz zu dem in Figur 1 gezeigten Ausführungsbeispiel dreiphasig ausgebildet ist. Sie verfügt über drei Phasenanschlüsse 2, über die jeweils ein Strom I1 bzw. I2 bzw. I3 fließt. Das Aktivteil 7 verfügt für jede Phase über eine Hauptwicklung 22, 23, 24, die mit ihrem Hochspannungsende 22a mit dem Phasenanschluss 2 und mit ihrem Niederspannungsende 5b mit einer Stufenwicklung 25, 26, 27 verbunden ist. Jede Hauptwicklung 25, 26, 27 ist induktiv mit einer konzentrisch zur jeweiligen Hauptwicklung angeordnete Sekundärwicklung gekoppelt, die in der jeweiligen Hauptwicklung angeordnet und daher figürlich nicht dargestellt ist. Jede Stufenwicklung 25, 26, 27 ist wieder mit einem Wähler 28, 29, 30 verknüpft, wobei jeder Wähler 28, 29, 30 mit einem Lastumschalter 31, 32, 33 in Reihe verbunden ist. Die Lastumschalter 31, 32, 33 werden synchron geschaltet, wobei jedes Schaltmesser 14 von einer Stellung, in der das Schaltmesser 14 den ersten Lastumschalterkontakt A kontaktiert, in eine zweite Stellung überführt wird, in der das Schaltmesser 1 an dem zweiten Lastumschalterkonstakt B anliegt. Ferner ist wieder eine Impedanzeinheit 15 erkennbar, die zwei Komponenten 16 und 17 aufweist. Jede Komponente 16, 17 der Impedanzeinheit 15 verfügt über eine erste Impendanzwicklung 37, eine zweite Impendanzwicklung 38 und eine dritte Impedanzwicklung 39, wobei jede erste Impedanzwicklung mit dem Wähler 28 und dem Lastumschalter 31 der ersten Phase, jede zweite Wicklung mit dem Wähler 29 und dem Lastumschalter 32 der zweiten Phase und die dritte Wicklung 39 mit dem Wähler 30 und dem Lastumschalter 33 der dritten Phase verbunden ist.

Liegt der als Schaltmesser 14 ausgeführte Bewegkontakt jedes Lastumschalters 31, 32, 33, wie in Figur 2 gezeigt, am Lastumschalterkontakt A an, werden die Ströme aller Phasen über die Komponente 16 der Impedanzeinheit 15 geführt. Die drei induktiv miteinander gekoppelten Impedanzwicklungen 37, 38, 39 der Komponente 16 sind so miteinander verschaltet, dass sich bei einem symmetrischen Stromfluss über die Phasen die Impedanzen der Impedanzwicklungen gegenseitig aufheben. In Summe weist die Komponente 16 also bei einem symmetrischen Stromfluss eine Impedanz von nahe Null auf.

Bei einem Kurzschluss einer der Stufenwicklungen 25, 26, 27 fließt über eine der Wicklungen 37, 38 oder 39 ein viel höherer Strom als über die beiden anderen Impedanzwicklungen, dass die gegenseitige Kompensation der Impedanzen endet und in Summe sich eine sehr hohe Impedanz der Komponente 16 einstellt. Somit sorgen die Komponenten 16, 17 der Impedanzeinheit 15 für eine Herabsetzung des Kurzschlussstroms zwischen den Wählern 28, 29, 30 und dem jeweiligen Lastumschalter 31, 32, 33, so dass geeignete Maßnahmen zur Fehlerbegrenzung bspw. durch Abschalten der Vorrichtung 1 vom Netz ergriffen werden können.

## Patentansprüche

1. Vorrichtung (1) zum Anschluss an ein Wechselspannung führendes Hochspannungsnetz mit mehreren Phasen aufweisend
- ein Aktivteil (7), das für jede Phase wenigstens einen Phasenanschluss zum Anschluss an eine Phase des Hochspannungsnetzes aufweist,
- mehrere mit einem der Phasenanschlüsse und dem Aktivteil (7) verbundene Stufenwicklungen (25, 26, 27) mit mehreren Anzapfungen und
- einen Stufenschalter, der für jede Stufenwicklung (25, 26, 27) einen Wähler (10, 11, 28, 29, 30) zum stromlosen Umschalten von einer aktuellen Anzapfung auf eine gewünschte Anzapfung der Stufenwicklung und einen dem Wähler in Reihe nachgeschalteten Lastumschalter (31, 32, 33) zum Kommutieren des Stromes von der aktuellen Anzapfung auf die gewünschte Anzapfung aufweist, wobei
- zwischen jedem Wähler (28, 29, 30) und jedem Lastumschalter (12, 13, 31, 32, 33) eine Impedanzeinheit (15) angeordnet ist, deren Impedanz zwischen einer niedrigen Impedanz und einer hohen Impedanz veränderbar ist,
- das Aktivteil (7) für jede Phase über wenigstens eine Hauptwicklung (22, 23, 24) verfügt, die an ihrem vom Phasenanschluss abgewandten Ende mit einer der Stufenwicklungen (25, 26, 27) verbunden ist,
- jeder Wähler (10, 11, 28, 29, 30) ein erstes Wählerkontaktteil (10a, 11a) zum Verbinden mit der aktuellen Anzapfung und ein zweites Wählerkontaktteil (10b, 11b) zum Verbinden mit der gewünschten Anzapfung aufweist,
- jeder Lastumschalter (31, 32, 33) über einen ersten Lastumschalterkontakt (A), der mit dem ersten Wählerkontaktteil galvanisch verbunden ist, einen zweiten Lastumschalterkontakt (B), der mit dem zweiten Wählerkontaktteil galvanisch verbunden ist, und über ein Bewegteil (14) verfügt, das in einer ersten Schalterstellung des Stufenschalters den ersten Lastumschalterkontakt (A) und in einer zweiten Schalterstellung den zweiten Lastumschalterkontakt (B) des Lastumschalters (31, 32, 33) kontaktiert, und
- die Impedanzeinheit (15) eine erste (16) und zweite (17) Komponente umfasst, wobei die erste Komponente (16) mit dem ersten Wählerkontaktteil jedes Wählers (28, 29, 30) und dem ersten Lastumschalterkontakt (A) jedes Lastumschalters (31, 32, 33) und die zweite Komponente (17) mit dem zweiten Wählerkontaktteil jedes Wählers und dem zweiten Lastumschalterkontakt (B) jedes Lastumschalters verbunden ist, so dass je nach Schalterstellung des Stufenschalters ein Stromfluss über die eine oder die andere Komponente (16, 17) ermöglicht ist,**dadurch gekennzeichnet**, d ass
jede Komponente (16, 17) der Impedanzeinheit (15) für jede Phase der Vorrichtung (1) eine Impedanzwicklung aufweist, wobei die Impedanzwicklungen einer Komponente (16, 17) induktiv miteinander gekoppelt und so miteinander verschaltet sind, dass sich bei einem symmetrischen Stromfluss über die Phasen der Vorrichtung (1) die Reaktanzen der Impedanzwicklungen einer Komponente (16, 17) gegenseitig kompensieren, so dass die jeweilige Komponente (16, 17) einen niedrigen resultierenden Impedanzwert aufweist.

2. Vorrichtung (1) zum Anschluss an ein Wechselspannung führendes Hochspannungsnetz mit mehreren Phasen aufweisend
- ein Aktivteil (7), das wenigstens einen Phasenanschluss zum Anschluss an eine Phase des Hochspannungsnetzes aufweist,
- mehrere mit einem der Phasenanschlüsse und dem Aktivteil (7) verbundene Stufenwicklungen (8, 9) mit mehreren Anzapfungen und
- einen Stufenschalter, der für jede Stufenwicklung (8, 9) einen Wähler (10, 11) zum stromlosen Umschalten von einer aktuellen Anzapfung auf eine gewünschte Anzapfung der Stufenwicklung und einen dem Wähler in Reihe nachgeschalteten Lastumschalter (12, 13) zum Kommutieren des Stromes von der aktuellen Anzapfung auf die gewünschte Anzapfung aufweist, wobei
- zwischen jedem Wähler (10, 11) und jedem Lastumschalter (12, 13) eine Impedanzeinheit (15) angeordnet ist, deren Impedanz zwischen einer niedrigen Impedanz und einer hohen Impedanz veränderbar ist,
- das Aktivteil (7) für jede Phase über wenigstens eine Hauptwicklung (5, 6) verfügt, die an ihrem vom Phasenanschluss abgewandten Ende mit einer der Stufenwicklungen (8, 9) verbunden ist,
- jeder Wähler (10, 11) ein erstes Wählerkontaktteil (10a, 11a) zum Verbinden mit der aktuellen Anzapfung und ein zweites Wählerkontaktteil (10b, 11b) zum Verbinden mit der gewünschten Anzapfung aufweist,
- jeder Lastumschalter (12, 13) über einen ersten Lastumschalterkontakt (A), der mit dem ersten Wählerkontaktteil galvanisch verbunden ist, einen zweiten Lastumschalterkontakt (B), der mit dem zweiten Wählerkontaktteil galvanisch verbunden ist, und über ein Bewegteil (14) verfügt, das in einer ersten Schalterstellung des Stufenschalters den ersten Lastumschalterkontakt (A) und in einer zweiten Schalterstellung den zweiten Lastumschalterkontakt (B) des Lastumschalters (12, 13) kontaktiert,
und
- die Impedanzeinheit (15) eine erste (16) und zweite (17) Komponente umfasst, wobei die erste Komponente (16) mit dem ersten Wählerkontaktteil jedes Wählers (10, 11) und dem ersten Lastumschalterkontakt (A) jedes Lastumschalters (12, 13) und die zweite Komponente mit dem zweiten Wählerkontaktteil jedes Wählers und dem zweiten Lastumschalterkontakt (B) jedes Lastumschalters verbunden ist, so dass je nach Schalterstellung des Stufenschalters ein Stromfluss über die eine oder die andere Komponente (16, 17) ermöglicht ist,
**dadurch gekennzeichnet, dass**
die Vorrichtung (1) einphasig ausgebildet ist und zwei symmetrische Strompfade (3, 4) aufweist, wobei in jedem Strompfad (3, 4) wenigstens eine Hauptwicklung (5, 6) des Aktivteils (7) angeordnet ist, die ein Hochspannungsende (5a, 6a), das mit dem Phasenanschluss verbunden ist, und ein Niederspannungsende (5b, 6b) aufweist, das mit einer Stufenwicklung (8, 9) verbunden ist, wobei jede Komponente (16, 17) der Impedanzeinheit zwei induktiv miteinander gekoppelte Impedanzwicklungen (18, 19) aufweist, wobei eine der Impedanzwicklungen (18) mit dem Wähler (10) und Lastumschalter (12) der ersten Stufenwicklung (8) und die andere Impedanzwicklung (16) mit dem Wähler (11) und dem Lastumschlalter (13) der zweiten Stufenwicklung (9) verbunden und so verschaltet ist, dass sich bei einem symmetrischen Stromfluss über beide Strompfade (3, 4) die Reaktanzen der Impedanzwicklungen (18, 19) einer Komponente (16, 17) gegenseitig kompensieren, so dass die jeweilige Komponente (16, 17) einen niedrigen Impedanzwert aufweist.

## Claims

1. Device (1) for connection to a high-voltage grid carrying AC voltage and having a plurality of phases, the device having
- an active part (7) that has, for each phase, at least one phase connection for connection to a phase of the high-voltage grid,
- a plurality of step windings (25, 26, 27) connected to one of the phase connections and the active part (7) and having a plurality of taps and
- a tap changer that has, for each step winding (25, 26, 27), a selector (28, 29, 30) for the current-free changeover from a current tap to a desired tap of the step winding and a load changeover switch (31, 32, 33) connected in series downstream of the selector for switching the current from the current tap to the desired tap, wherein
- an impedance unit (15) is arranged between each selector (28, 29, 30) and each load changeover switch (31, 32, 33), the impedance of which is able to be changed between a low impedance and a high impedance,
- the active part (7) for each phase has at least one main winding (22, 23, 24) that is connected to one of the step windings (25, 26, 27) at its end remote from the phase connection,
- each selector (28, 29, 30) has a first selector contact part (10a, 11a) for connection to the current tap and a second selector contact part (10b, 11b) for connection to the desired tap,
- each load changeover switch (31, 32, 33) has a first load changeover switch contact (A) that is galvanically connected to the first selector contact part, a second load changeover switch contact (B) that is galvanically connected to the second selector contact part and a moving part (14) that makes contact with the first load changeover switch contact (A) in a first switch position of the tap changer and with the second load changeover switch contact (B) of the load changeover switch (31, 32, 33) in a second switch position, and
- the impedance unit (15) comprises a first (16) and second (17) component, wherein the first component (16) is connected to the first selector contact part of each selector (28, 29, 30) and the first load changeover switch contact (A) of each load changeover switch (31, 32, 33) and the second component (17) is connected to the second selector contact part of each selector and the second load changeover switch contact (B) of each load changeover switch, such that a current flow through one or the other component (16, 17) is enabled depending on the switch position of the tap changer, **characterized in that**
each component (16, 17) of the impedance unit (15) for each phase of the device (1) has an impedance winding, wherein the impedance windings of a component (16, 17) are inductively coupled to one another and interconnected with one another such that, in the event of a symmetric current flow through the phases of the device (1), the reactances of the impedance windings of a component (16, 17) compensate for one another, such that the respective component (16, 17) has a lower resultant impedance value.

2. Device (1) for connection to a high-voltage grid carrying AC voltage and having a plurality of phases, the device having
- an active part (7) that has at least one phase connection for connection to a phase of the high-voltage grid,
- a plurality of step windings (8, 9) connected to one of the phase connections and the active part (7) and having a plurality of taps and
- a tap changer that has, for each step winding (8, 9), a selector (10, 11) for the current-free changeover from a current tap to a desired tap of the step winding and a load changeover switch (12, 13) connected in series downstream of the selector for switching the current from the current tap to the desired tap, wherein
- an impedance unit (15) is arranged between each selector (10, 11) and each load changeover switch (12, 13), the impedance of which is able to be changed between a low impedance and a high impedance,
- the active part (7) for each phase has at least one main winding (5, 6) that is connected to one of the step windings (8, 9) at its end remote from the phase connection,
- each selector (10, 11) has a first selector contact part (10a, 11a) for connection to the current tap and a second selector contact part (10b, 11b) for connection to the desired tap,
- each load changeover switch (12, 13) has a first load changeover switch contact (A) that is galvanically connected to the first selector contact part, a second load changeover switch contact (B) that is galvanically connected to the second selector contact part and a moving part (14) that makes contact with the first load changeover switch contact (A) in a first switch position of the tap changer and with the second load changeover switch contact (B) of the load changeover switch (12, 13) in a second switch position,
- the impedance unit (15) comprises a first (16) and second (17) component, wherein the first component (16) is connected to the first selector contact part of each selector (10, 11) and the first load changeover switch contact (A) of each load changeover switch (12, 13) and the second component is connected to the second selector contact part of each selector and the second load changeover switch contact (B) of each load changeover switch, such that a current flow through one or the other component (16, 17) is enabled depending on the switch position of the tap changer, **characterized in that**
the device (1) is of single-phase design and has two symmetric current paths (3, 4), wherein at least one main winding (5, 6) of the active part (7) is arranged in each current path (3, 4) and has a high-voltage end (5a, 6a) that is connected to the phase connection and a low-voltage end (5b, 6b) that is connected to a step winding (8, 9), wherein each component (16, 17) of the impedance unit has two impedance windings (18, 19) coupled inductively to one another, wherein one of the impedance windings (18) is connected to the selector (10) and the load changeover switch (12) of the first step winding (8) and the other impedance winding (16) is connected to the selector (11) and the load changeover switch (13) of the second step winding (9) and interconnected such that, in the event of a symmetric current flow through both current paths (3, 4), the reactances of the impedance windings (18, 19) of a component (16, 17) compensate for one another, such that the respective component (16, 17) has a low impedance value.

## Revendications

1. Dispositif (1) de raccordement à un réseau en haute tension conduisant une tension alternative avec plusieurs phases comportant
- une partie (7) active, qui a, pour chaque phase, au moins une borne de phase pour le raccordement à une phase du réseau en haute tension,
- plusieurs enroulements (25, 26, 27) à gradins, qui sont reliés à l'une des bornes de phase et à la partie (7) active et qui ont plusieurs prises, et
- un interrupteur à gradins, qui a, pour chaque enroulement (25, 26, 27) à gradins, un sélecteur (28, 29, 30) de passage sans perte de courant d'une prise en cours à une prise souhaitée de l'enroulement à gradins, et un commutateur (31, 32, 33) de charge, monté en aval en série avec le sélecteur, de commutation du courant de la prise en cours à la prise souhaitée, dans lequel
- entre chaque sélecteur (28, 29, 30) et chaque commutateur (31, 32, 33) de charge est montée une unité (15) d'impédance, dont l'impédance peut être modifiée entre une impédance petite et une impédance grande,
- la partie (7) active dispose, pour chaque phase, d'au moins un enroulement (22, 23, 24) principal, qui est relié à son extrémité, non tournée vers la borne de phase, à l'un des enroulements (25, 26, 27) à gradins,
- chaque sélecteur (28, 29, 30) a une première partie (10a, 11a) de contact de sélecteur pour la liaison à la prise en cours et une deuxième partie (10b, 11b) de contact de sélecteur pour la liaison à la prise souhaitée,
- chaque commutateur (31, 32, 33) de charge contacte, par un premier contact (A) de commutateur de charge, qui est relié galvaniquement à la première partie de contact du sélecteur, un deuxième contact (B) de commutateur de charge, qui est relié galvaniquement à la deuxième partie de contact du sélecteur et dispose d'une partie (14) mobile, qui contacte, dans une première position de l'interrupteur à gradins, le premier contact (A) du commutateur de charge et, dans une deuxième position de l'interrupteur à gradins, le deuxième contact (B) du commutateur (31, 32, 33) de charge, et
- l'unité (15) d'impédance comprend un premier (16) et un deuxième (17) composant, le premier composant (16) étant relié à la première partie de contact de chaque sélecteur (28, 29, 30) et au premier contact (A) de chaque commutateur (31, 32, 33) de charge, et le deuxième composant (17) à la deuxième partie de contact de chaque sélecteur et au deuxième contact (B) de chaque commutateur de charge, de manière à ce que, suivant la position de l'interrupteur à gradins, un flux de courant soit possible dans l'un ou l'autre composant (16, 17),
**caractérisé en ce que** chaque composant (16, 17) de l'unité (15) d'impédance a, pour chaque phase du dispositif (1), un enroulement d'impédance, dans lequel les enroulements d'impédance d'un composant (16, 17) sont couplés entre eux inductivement et sont reliés entre eux, de manière à ce que, pour un flux de courant symétrique sur les phases du dispositif (1), les réactances des enroulements d'impédance d'un composant (16, 17) se compensent mutuellement, de sorte que le composant (16, 17) respectif a une valeur d'impédance résultante petite.

2. Dispositif (1) de raccordement à un réseau en haute tension conduisant une tension alternative avec plusieurs phases comportant
- une partie (7) active, qui a, pour chaque phase, au moins une borne de phase pour le raccordement à une phase du réseau en haute tension,
- plusieurs enroulements (8, 9) à gradins reliés à l'une des bornes de phase et à la partie (7) active et comprenant plusieurs prises, et
- un interrupteur à gradins, qui a, pour chaque enroulement (8, 9) à gradins, un sélecteur (10, 11) de passage sans courant d'une prise en cours à une prise souhaitée de l'enroulement à gradins et un commutateur (12, 13) de charge, monté en aval en série avec le sélecteur, pour la commutation du courant de la prise en cours à la prise souhaitée, dans lequel,
- entre chaque sélecteur (10, 11) et chaque commutateur (12, 13) de charge est montée une unité (15) d'impédance, dont l'impédance est variable entre une impédance petite et une impédance grande,
- la partie (7) active dispose, pour chaque phase, d'au moins un enroulement (5, 6) principal, qui est relié à son extrémité non tournée vers la borne de phase à l'un des enroulements (8, 9) à gradins,
- chaque sélecteur (10, 11) a une première partie (10a, 11a) de contact de sélecteur pour la liaison à la prise en cours, et une partie (10b, 11b) de contact de sélecteur pour la liaison à la prise souhaitée,
- chaque commutateur (12, 13) de charge contacte, par un premier contact (A) de commutateur de charge, qui est relié galvaniquement à la première partie de contact du sélecteur, un deuxième contact (B) de commutateur de charge, qui est relié galvaniquement à la deuxième partie de contact du sélecteur, et dispose d'une partie (14) mobile, qui contacte, dans une première position de l'interrupteur à gradins, le premier contact (A) du commutateur de charge et, dans une deuxième position de commutation, le deuxième contact (B) du commutateur (12, 13) de charge, et
- l'unité (15) d'impédance comprend un premier (16) et un deuxième (17) composant, dans lequel le premier composant (16) est relié à la première partie de contact de chaque sélecteur (10, 11) et au premier contact (A) de chaque commutateur (12, 13) de charge, et le deuxième composant à la deuxième partie de contact de chaque sélecteur et au deuxième contact (B) de chaque commutateur de charge, de manière à ce que, suivant la position de l'interrupteur à gradins, un flux de courant soit possible dans l'un ou l'autre composant (16, 17),
**caractérisé en ce que** le dispositif (1) est constitué de manière monophasée et a deux chemins (3, 4) de courant symétriques, dans lequel, dans chaque chemin (3, 4) de courant est monté au moins un enroulement (5, 6) principal de la partie (7) active, qui a une extrémité (5a, 6a) de haute tension, qui est reliée à la borne de phase, et une extrémité (5b, 6b) de basse tension, qui est reliée à un enroulement (8, 9) à gradins, dans lequel chaque composant (16, 17) de l'unité d'impédance a deux enroulements (18, 19) d'impédance couplés entre eux inductivement, dans lequel l'un des enroulements (18) d'impédance est relié au sélecteur (10) et au commutateur (12) de charge du premier enroulement (8) à gradins, et l'autre enroulement (16) d'impédance est relié au sélecteur (11) et au commutateur (13) de charge du deuxième enroulement (9) à gradins et est relié de manière à ce que, pour un flux de courant symétrique dans les deux chemins (3, 4) de courant, les réactances des enroulements (18, 19) d'impédance d'un composant (16, 17) soient compensées mutuellement, de sorte que le composant (16, 17) respectif a une valeur d'impédance petite.
